(19) Europäisches Patentamt
European Patent Office
Office européen des brevets

(11) **EP 3 945 462 A1**

(12) **EUROPEAN PATENT APPLICATION**

(43) Date of publication:
**02.02.2022 Bulletin 2022/05**

(21) Application number: **21188021.6**

(22) Date of filing: **27.07.2021**

(51) International Patent Classification (IPC):
**G06K 9/00** *(2022.01)*    **G06K 9/62** *(2022.01)*

(52) Cooperative Patent Classification (CPC):
**G06K 9/00342; G06K 9/6215**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.07.2020 JP 2020126449**

(71) Applicant: **TOYOTA JIDOSHA KABUSHIKI KAISHA**
**Toyota-shi, Aichi-ken 471-8571 (JP)**

(72) Inventors:
• **KAKU, Wataru**
  **Aichi-ken, 471-8571 (JP)**
• **LEE, Haeyeon**
  **Aichi-ken, 471-8571 (JP)**
• **HORI, Tatsuro**
  **Aichi-ken, 471-8571 (JP)**
• **WATANABE, Narimasa**
  **Aichi-ken, 471-8571 (JP)**

(74) Representative: **D Young & Co LLP**
**120 Holborn**
**London EC1N 2DY (GB)**

(54) **MATCHING SYSTEM, MATCHING METHOD, AND MATCHING PROGRAM**

(57)    The present disclosure provides a matching system capable of performing appropriate matching among persons based on the movements of these persons. A first exemplary aspect is a matching system (1), including: an acquisition unit (2) configured to acquire information about movement of a person in a time series; a calculation unit (3) configured to calculate a similarity score numerically indicating a similarity between the acquired information about the movement of the person and information about movement of a person with whom a comparison is to be made by comparing the acquired information about the movement of the person with the information about movement of the person with whom the comparison is to be made; and a generation unit (5) configured to generate matching information based on the similarity score.

Fig. 1

**Description**

BACKGROUND

The present disclosure relates to a matching system, a matching method, and a matching program.

In recent years, a matching system has been used to easily find persons whose preferences and the like are similar to each other. Such a matching system, as disclosed in Japanese Unexamined Patent Application Publication No. 2017-16342, performs matching among persons whose preferences and the like are similar to each other based on profiles input by these persons.

SUMMARY

The applicant has however found the following problem. Although a general matching system can perform matching among persons whose preferences or the like are similar to each other based on profiles input by these persons, it cannot perform appropriate matching among persons based on the movements of these persons.

The present disclosure has been made in view of the above-described problem and provides a matching system, a matching method, and a matching program that are capable of performing appropriate matching among persons based on the movements of these persons.

A first exemplary aspect is a matching system, including:

an acquisition unit configured to acquire information about movement of a person in a time series;
a calculation unit configured to calculate a similarity score numerically indicating a similarity between the acquired information about the movement of the person and information about movement of a person with whom a comparison is to be made by comparing the acquired information about the movement of the person with the information about movement of the person with whom the comparison is to be made; and
a generation unit configured to generate matching information based on the similarity score.

As described above, since matching information is generated based on a result of a comparison between the movement of a person and the movement of a person with whom the comparison is to be made, it is possible to perform appropriate matching among persons based on the movements of these persons.

In the matching system described above, the calculation unit may calculate the similarity score based on a difference between a first state score indicating a total sum of distances obtained by adding, at a first cycle, a distance between two predetermined points on a body of the person, the distance being calculated based on the acquired information about the movement of the person, and a second state score indicating a total sum of distances obtained by adding, at the first cycle, a distance between the two points on a body of the person with whom the comparison is to be made, the distance being calculated based on the information about the movement of the person with whom the comparison is to be made.

In the matching system described above, the calculation unit may calculate the similarity score based on a difference between a third state score indicating an average value of the number of times per unit time of respiration or pulse of the person within a predetermined period, the average value being calculated based on the acquired information about the movement of the person, and a fourth state score indicating an average value of the number of times per unit time of respiration or pulse of the person with whom the comparison is to be made within the period, the average value being calculated based on the information about the movement of the person with whom the comparison is to be made.

In the matching system described above, the calculation unit may calculate the average value by integrating a weight in the number of the times per unit time in accordance with time in the period.

In the matching system described above, the generation unit may determine persons whose similarity scores are within a predetermined error range to be persons having a high similarity to each other, and generate the matching information so that the persons having a high similarity to each other are matched with each other.

In the matching system described above, the generation unit may learn a model that inputs the similarity score and outputs the error range by supervised learning using, as a correct answer, a matching evaluation obtained by a person evaluating the matching information, and perform matching between persons based on the output error range.

In the matching system described above, the generation unit may assign persons so that the persons having a high similarity to each other are matched with each other based on a plurality of predetermined error ranges.

In the matching system described above, the generation unit assigns the persons again by using a self-organizing map composed of a feature vector of a change in the distance between the two predetermined points on the body of the person in each second cycle, the distance being calculated based on the acquired information about the movement of the person, and a feature vector of a matching evaluation obtained by a person evaluating the matching information.

Another exemplary aspect is a matching method, including:

acquiring information about movement of a person in a time series;

calculating a similarity score numerically indicating a similarity between the acquired information about the movement of the person and information about movement of a person with whom a comparison is to be made by comparing the acquired information about the movement of the person with the information about movement of the person with whom the comparison is to be made; and

generating matching information based on the similarity score.

As described above, since matching information is generated based on a result of a comparison between the movement of a person and the movement of a person with whom the comparison is to be made, it is possible to perform appropriate matching among persons based on the movements of these persons.

Another exemplary aspect is a matching program for causing a computer to:

acquire information about movement of a person in a time series;

calculate a similarity score numerically indicating a similarity between the acquired information about the movement of the person and information about movement of a person with whom a comparison is to be made by comparing the acquired information about the movement of the person with the information about movement of the person with whom the comparison is to be made; and

generate matching information based on the similarity score.

As described above, since matching information is generated based on a result of a comparison between the movement of a person and the movement of a person with whom the comparison is to be made, it is possible to perform appropriate matching among persons based on the movements of these persons.

According to the present disclosure, it is possible to provide a matching system, a matching method, and a matching program that are capable of performing appropriate matching among persons based on the movements of these persons.

The above and other objects, features and advantages of the present disclosure will become more fully understood from the detailed description given hereinbelow and the accompanying drawings which are given by way of illustration only, and thus are not to be considered as limiting the present disclosure.

BRIEF DESCRIPTION OF DRAWINGS

Fig. 1 is a diagram showing how a matching system according to a first embodiment is used;

Fig. 2 is a block diagram showing a configuration of the matching system according to the first embodiment;

Fig. 3 is a flowchart showing a flow of a matching method according to the first embodiment;

Fig. 4 is a table showing the relation between each acquired distance and the time at which each distance has been acquired;

Fig. 5 is a diagram showing an example of a hardware configuration included in the matching system; and

Fig. 6 is a flowchart showing a flow of another matching method.

DESCRIPTION OF EMBODIMENTS

Specific embodiments to which the present disclosure is applied will be described hereinafter in detail with reference to the drawings. However, the present disclosure is not limited to the embodiments shown below. Further, for the clarification of the explanation, the following descriptions and the drawings are simplified as appropriate.

<First Embodiment>

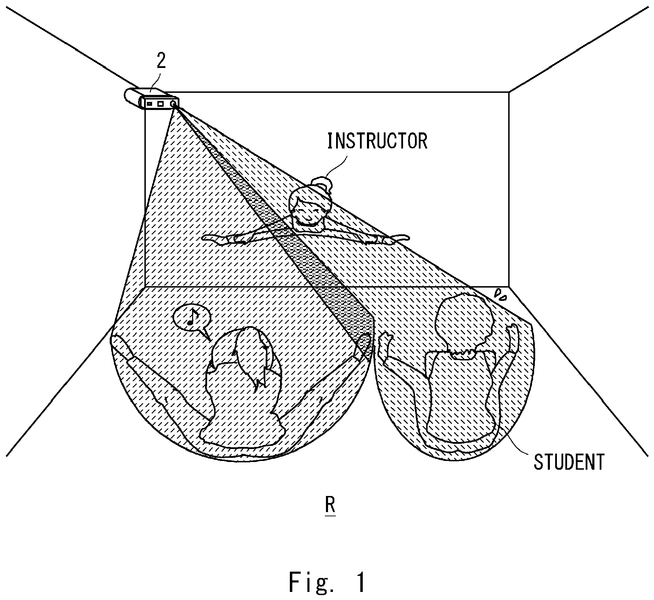

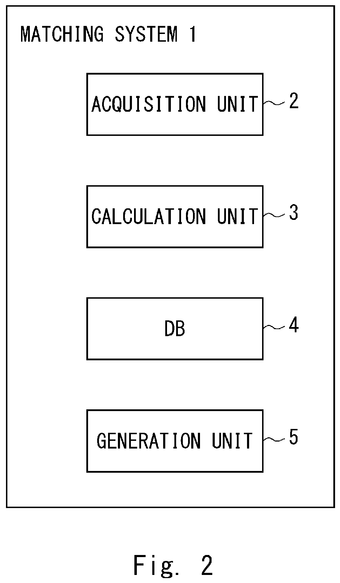

First, a configuration of a matching system according to this embodiment will be described. Fig. 1 is a diagram showing how the matching system according to this embodiment is used. Fig. 2 is a block diagram showing a configuration of the matching system according to this embodiment.

For example, as shown in Fig. 1, a matching system 1 according to this embodiment is suitably used when students are assigned to classes according to the levels of the students in a yoga lesson. However, the matching system 1 can be used not only for a yoga lesson but also to provide appropriate matching information among persons based on the movements of these persons.

As shown in Fig. 2, the matching system 1 includes an acquisition unit 2, a calculation unit 3, a database (DB) 4, and a generation unit 5. The acquisition unit 2 acquires information about movement of a student in a time series. For example, as shown in Fig. 1, the acquisition unit 2 is a motion capture apparatus such as a kinect (registered trademark) or a fitbit (registered trademark) which is installed in a lesson room R and which can acquire information about movement of a student in a time series. The acquisition unit 2 outputs the acquired information indicating the time series movement of the student to the database 4.

However, the acquisition unit 2 only needs to be able to acquire information about movement of the student who is taking a yoga lesson in the lesson room R in a time series, and may acquire information about movement of the student in a time series, for example, from a motion capture apparatus installed in the lesson room R. That is, the acquisition unit 2 may function as an input unit for information indicating the time series movement of the student. Further, the acquisition unit 2 only needs to be able to acquire, in a time series, image information from which the skeletal coordinates of the student can be acquired as described later.

The calculation unit 3 calculates a similarity score numerically indicating a similarity between the acquired information about the movement of a student and information about the movement of a person with whom a comparison is to be made by comparing the acquired information about the time-series movement of the student with the information about the time-series movement of the person with whom the comparison is to be made. This operation will be described later in detail. Here, a person with whom a comparison is to be made may be a student or an instructor.

The calculation unit 3 outputs information indicating the calculated similarity score to the database 4. The database 4 stores acquired information indicating the time series movement of a person, information indicating the time series movement of a person with whom a comparison is to be made, information indicating a similarity score, student information (e.g., the face, the name, the address, the mobile terminal ID, and the email address of a student), and the like. The generation unit 5 generates matching information so that students of substantially the same level are assigned to the same class based on the similarity score. This operation will be described later in detail.

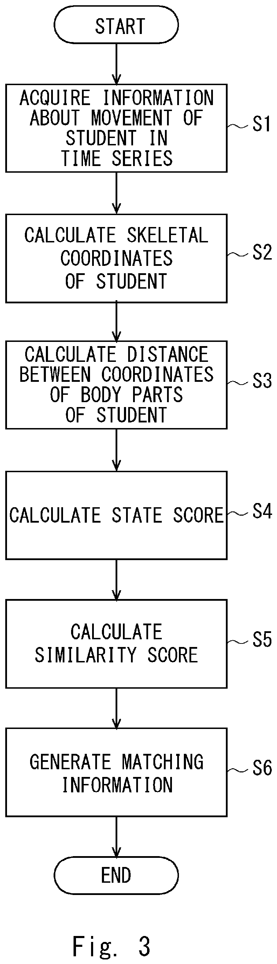

Next, a flow of a matching method according to this embodiment will be described. Fig. 3 is a flowchart showing the flow of the matching method according to this embodiment. As shown in Fig. 1, it is assumed here that a student takes a yoga lesson in such a way that he/she imitates the exemplary posture of an instructor displayed on a display in the lesson room R.

First, the acquisition unit 2 acquires information indicating the time-series movement of a student who is performing yoga in such a way that he/she imitates the exemplary posture of an instructor, and outputs the acquired information indicating the time-series movement of the student to the database 4 (S1). Then the calculation unit 3 calculates a state score based on the time series movement of the student. Specifically, the calculation unit 3 reads the information indicating the time-series movement of the student from the database 4, and calculates the skeletal coordinates of the student in each predetermined cycle based on the time-series movement of the student indicated by the read information (S2).

The calculation unit 3 calculates, as skeletal coordinates, for example, seven coordinates of a head coordinate (H), a neck coordinate (N), a left hand coordinate (Hl), a right hand coordinate (Hr), a waist coordinate (S), a left foot coordinate (Fl), and a right foot coordinate (Fr). It should be noted that each coordinate can be selected from the coordinates set in advance as coordinates that can be acquired by a motion capture apparatus, and has values of X coordinate, Y coordinate, and Z coordinate. However, it is only required that at least two coordinates be calculated. Further, the coordinates to be calculated can be set based on the body parts of a person as appropriate.

Next, the calculation unit 3 calculates a distance between the coordinates of the body parts of a student in each predetermined cycle (S3). The calculation unit 3 calculates, for example, distances between all the coordinates of the body parts of the student. That is, the calculation unit 3 calculates a distance ($d_{HN}$) between the head coordinate (H) and the neck coordinate (N) as one dimension, a distance ($d_{HHl}$) between the head coordinate (H) and the left hand coordinate (Hl) as two dimensions, and a distance ($d_{HHr}$) between the head coordinate (H) and the right hand coordinate (Hr) as three dimensions.

Further, the calculation unit 3 calculates a distance ($d_{HS}$) between the head coordinate (H) and the waist coordinate (S) as four dimensions, a distance ($d_{HFl}$) between the head coordinate (H) and the left foot coordinate (Fl) as five dimensions, a distance ($d_{HFr}$) between the head coordinate (H) and the right foot coordinate (Fr) as six dimensions, a distance ($d_{NHl}$) between the neck coordinate (N) and the left hand coordinate (Hl) as seven dimensions, and a distance ($d_{NHr}$) between the neck coordinate (N) and the right hand coordinate (Hr) as eight dimensions.

Further, the calculation unit 3 calculates a distance ($d_{NS}$) between the neck coordinate (N) and the waist coordinate (S) as nine dimensions, a distance ($d_{NFl}$) between the neck coordinate (N) and the left foot coordinate (Fl) as 10 dimensions, a distance ($d_{NFr}$) between the neck coordinate (N) and the right foot coordinate (Fr) as 11 dimensions, a distance ($d_{HlHr}$) between the left hand coordinate (Hl) and the right hand coordinate (Hr) as 12 dimensions, and a distance ($d_{HlS}$) between the left hand coordinate (Hl) and the waist coordinate (S) as 13 dimensions.

Further, the calculation unit 3 calculates a distance ($d_{HlFl}$) between the left hand coordinate (Hl) and the left foot coordinate (Fl) as 14 dimensions, a distance ($d_{HlFr}$) between the left hand coordinate (Hl) and the right foot coordinate (Fr) as 15 dimensions, a distance ($d_{HrS}$) between the right hand coordinate (Hr) and the waist coordinate (S) as 16 dimensions, and a distance ($d_{HrFl}$) between the right hand coordinate (Hr) and the left foot coordinate (Fl) as 17 dimensions.

Further, the calculation unit 3 calculates a distance ($d_{HrFr}$) between the right hand coordinate (Hr) and the right foot coordinate (Fr) as 18 dimensions, a distance ($d_{SFl}$) between the waist coordinate (S) and the left foot coordinate (Fl) as 19 dimensions, a distance ($d_{SFr}$) between the waist coordinate (S) and the right foot coordinate (Fr) as 20 dimensions, and a distance ($d_{FlFr}$) between the left foot coordinate (Fl) and the right foot coordinate (Fr) as 21 dimensions.

As an example, the calculation unit 3 can calculate the distance ($d_{HN}$) between the head coordinate (H) and the neck coordinate (N) based on the following <Expression 1>.

$$[\text{Expression 1}]$$

$$d_{HN} = \sqrt{(x_H - x_N)^2 + (y_H - y_N)^2 + (z_H - z_N)^2}$$

In Expression 1, $X_H$ is the X coordinate of the head, $Y_H$ is the Y coordinate of the head, and $Z_H$ is the Z coordinate of the head. Further, $X_N$ is the X coordinate of the neck, $Y_N$ is the Y coordinate of the neck, and $Z_N$ is the Z coordinate of the neck.

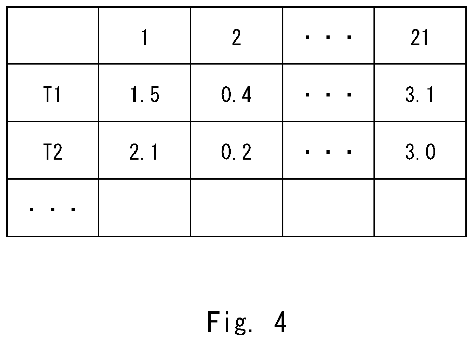

Similarly, other distances ($d_{HHl}$, $d_{HHr}$, $d_{HS}$, $d_{HFl}$, $d_{HFr}$, $d_{NHl}$, $d_{NHr}$, $d_{NS}$, $d_{NFl}$, $d_{NFr}$, $d_{HlHr}$, $d_{HlS}$, $d_{HlFl}$, $d_{HlFr}$, $d_{HrS}$, $d_{HrFl}$, $d_{HrFr}$, $d_{SFL}$, dsFr, and $d_{FlFr}$) can also be calculated. Further, the calculation unit 3 repeats the above-described calculation of the distance in each predetermined cycle. Fig. 4 is a table showing the relation between each acquired distance and the time at which each distance has been acquired. In Fig. 4, the column is a dimension number and the row is a time. Note that in Fig. 4, only some of the numerical values are shown for the sake of simplification.

As shown in Fig. 4, the calculation unit 3 can acquire the distances ($d_{HN}$, $d_{HHl}$, $d_{HHr}$, $d_{HS}$, $d_{HFl}$, $d_{HFr}$, $d_{NHl}$, $d_{NHr}$, $d_{NS}$, $d_{NFl}$, $d_{NFr}$, $d_{HlHr}$, $D_{HlS}$, $d_{HlFl}$, $d_{HlFr}$, $d_{HrS}$, $d_{HrFl}$, $d_{HrFr}$, $d_{SFl}$, $d_{SFr}$, $d_{FlFr}$) in a time series.

Next, the calculation unit 3 calculates, as a state score, the total sum of the distances ($d_{HN}$, $d_{HHl}$, $d_{HHr}$, $d_{Hs}$, $d_{HFl}$, $d_{HFr}$, $d_{NHl}$, $d_{NHr}$, $d_{NS}$, $d_{NFl}$, $d_{NFr}$, $d_{HlHr}$, $d_{HlS}$, $d_{HlFl}$, $d_{HlFr}$, $d_{HrS}$, $d_{HrFl}$, $d_{HrFr}$, $d_{SFl}$, $d_{SFr}$, $d_{FlFr}$) calculated in each predetermined cycle within a predetermined period (S4). Then the calculation unit 3 outputs information indicating the calculated state score to the database 4.

That is, the calculation unit 3 calculates the total sum (SUM) of the distances based on <Expression 2>.

$$[\text{Expression 2}]$$

$$\text{SUM} = \Sigma_t^T \Sigma_{i=1}^{21} d_i$$

In Expression 2, i is a dimension number, t is the time at which the calculation of the total sum starts, and T is the time at which the calculation of the total sum ends.

Next, the calculation unit 3 reads information indicating the state score of the student and information indicating the state score of an instructor from the database 4, compares these state scores indicated by the read information with each other, and calculates a similarity score (S5). Here, the information indicating the state score of the instructor may be acquired in advance in the same flow as the flow of acquiring the information indicating the state score of the student in advance described above and stored in the database 4.

Specifically, the calculation unit 3 calculates, for example, a value obtained by subtracting the state score of the student from the state score of the instructor as a similarity score numerically indicating a similarity between the movement of the student and the movement of the instructor. Then the calculation unit 3 outputs information indicating the calculated similarity score to the database 4.

Next, the generation unit 5 reads information indicating the similarity score from the database 4, and generates matching information based on the similarity score indicated by the read information (S6). For example, information indicating a plurality of error ranges may be stored in the database 4 in advance in accordance with the number of classes of the yoga lesson. The generation unit 5 reads information indicating a plurality of error ranges from the database 4, and determines to which of the plurality of error ranges the similarity score belongs.

The generation unit 5 generates a class of the error range to which the similarity score belongs as matching information. That is, the generation unit 5 determines that persons whose similarity scores are within a predetermined error range have a high similarity to each other, and generates matching information so that the persons having a high similarity to each other are assigned to the same class. At this time, when information indicating a schedule of the student and information indicating a time table for each class are stored in the database 4 in advance, the generation unit 5 may generate, as matching information, a class which the student can take in accordance with the schedule of the student.

It should be noted that the generation unit 5 may learn a model that inputs information indicating a similarity score as input information and outputs information indicating a plurality of error ranges as output information by supervised learning using, as a correct answer, a matching evaluation obtained by a person evaluating the matching information after the person is assigned, and assign persons based on the plurality of output error ranges. At this time, the matching evaluation is teaching information indicating whether a person is satisfied or not satisfied with matching information. Note that a general neural network or the like can be used as the model.

After that, the generation unit 5 may read information indicating the time-series movement of the student and student information from the database 4, specify the student by performing face authentication of the student based on the read information indicating the time-series movement, the face, the mobile terminal ID, and the like of the student, and output matching information to the mobile terminal of the student. Further, the generation unit 5 may output the matching information to a personal computer of a studio where the yoga lesson is being held. However, any presentation method in which the generation unit 5 can present the matching information to the student can be used.

As described above, the matching system 1 and the matching method according to this embodiment generate matching information based on a result of a comparison between the movement of a person and the movement of a person with whom the comparison is to be made. Therefore, the matching system 1 and the matching method according to this embodiment can perform appropriate matching among persons based on the movements of these persons. Further, persons of a similar level can be easily assigned to the same class.

Note that in this embodiment, although matching information for assigning students who take yoga lessons to classes is generated, lesson images corresponding to the levels of the students may be distributed as matching information. Further, information indicating the time-series movement of the student acquired in real time or acquired in the past may be used to generate matching information. Further, students having a high similarity to each other may be assigned to the same class based on a comparison between the respective state scores of the students rather than a comparison between the state score of the student and the state score of the instructor.

<Second Embodiment>

In the matching system 1 and the matching method according to the first embodiment, matching information for assigning students who take yoga lessons to classes is generated. However, for example, matching information for matching between one patient and another patient who undergo rehabilitation may be generated.

In this case, for example, the other patient (a second patient) is assumed to be a person with whom a comparison is to be made, and a similarity score is calculated based on the difference between the state score of the one patient (a first patient) and the state score of the second patient, and matching information is generated for introducing the second patient whose similarity score is within a predetermined error range to the first patient as a fellow rehabilitation patient. By doing so, patients of substantially the same rehabilitation level can perform rehabilitation in a group, and thereby the effect of rehabilitation can be improved.

Note that in this embodiment, although the first patient is matched with the second patient having a high similarity to the first patient based on a comparison between the respective similarity scores of these patients, patients having a high similarity to each other may be matched with each other based on a comparison between the state score of the instructor as a person with whom the comparison is to be made and the state score of the patient.

<Third Embodiment>

In the first and the second embodiments described above, matching information is generated based on the posture of a person as the movement of the person. However, as the movement of the person, the amount of load may also be referred to. Specifically, a motion capture apparatus can acquire the number of respiration or pulse times of a person in a time series.

Therefore, as described above, in addition to a first state score based on the posture of a person and a second state score based on the posture of a person with whom a comparison is to be made, the calculation unit 3 calculates a third state score indicating the average value of the number of times per unit time of respiration or pulse of the person within a predetermined period and a fourth state score indicating the average value of the number of times per unit time of respiration or pulse of the person with whom the comparison is to be made within the predetermined period.

At this time, the average value may be calculated by integrating a weight in the number of times per unit time in accordance with time in the predetermined period. For example, in such a manner that more attention is paid to the number of times per unit time in the second half of the predetermined period than to the number of times per unit time in the first half thereof, the weight may be set so that the weights integrated in the number of times per unit time in the second half become heavier than the weights integrated in the number of times per unit time in the first half. For example, the weight integrated in the average value may be increased toward the second half.

Then the calculation unit 3 calculates a first similarity score based on the difference between the first state score and the second state score, and calculates a second similarity score based on the difference between the third state score and the fourth state score.

The generation unit 5 generates matching information so that persons whose first similarity scores are within a predetermined first error range and second similarity scores are within a predetermined second error range are matched with each other. By doing so, it is possible to generate more accurate matching information.

Note that in this embodiment, persons are matched with each other based on the posture and the amount of load of the person, but the persons may be matched with each other based only on the amount of load of the person.

<Other Embodiments>

Although the present disclosure has been described as a hardware configuration in the above first to third embodiments, the present disclosure is not limited thereto. In the present disclosure, processing of each component can also be implemented by causing a Central Processing Unit (CPU) to execute a computer program.

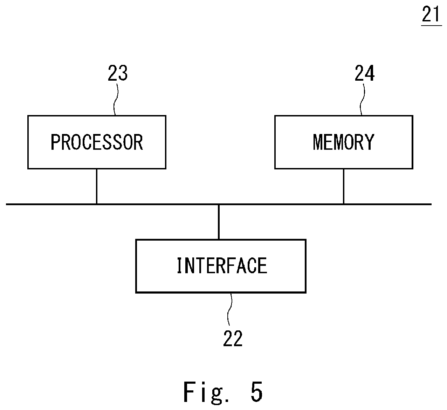

For example, the matching system according to the above-described embodiments can include the following hardware configuration. Fig. 5 is a diagram showing an example of the hardware configuration included in the matching system.

An apparatus 21 shown in Fig. 5 includes an interface 22, a processor 23, and a memory 24. The matching system described in the above embodiments is implemented by the processor 23 loading and executing a program stored in the memory 24. That is, this program is a program for causing the processor 23 to function as the matching system according to the above-described embodiments.

The above-described program can be stored and provided to a computer (a computer including an information notification apparatus) using any type of non-transitory computer readable media. Non-transitory computer readable media include any type of tangible storage media. Examples of non-transitory computer readable media include magnetic storage media (such as floppy disks, magnetic tapes, hard disk drives, etc.), and optical magnetic storage media (e.g., magneto-optical disks). This examples further include CD-ROM (Read Only Memory), CD-R, and CD-R/W. This examples further include semiconductor memories (such as mask ROM, PROM, EPROM, flash ROM, RAM, etc.). Further, the program may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

The present disclosure is not limited to the above-described embodiments and may be modified as appropriate without departing from the spirit of the present disclosure.

For example, persons having a close similarity to each other may be matched with each other based on the movement of the person at home, such as the amount of movement or the change of his/her posture. That is, the matching system according to the above-described embodiments can be applied to any situation involving the movement of a person, and can be applied to various types of lessons, training, and the like by selecting a body part for which the coordinates are acquired and a state of a person as appropriate.

For example, after persons are first assigned (clustered), each person may be assigned again to another person whose preferences is more similar to them than the person first assigned based on document information such as Social Networking Services (SNS) of the person.

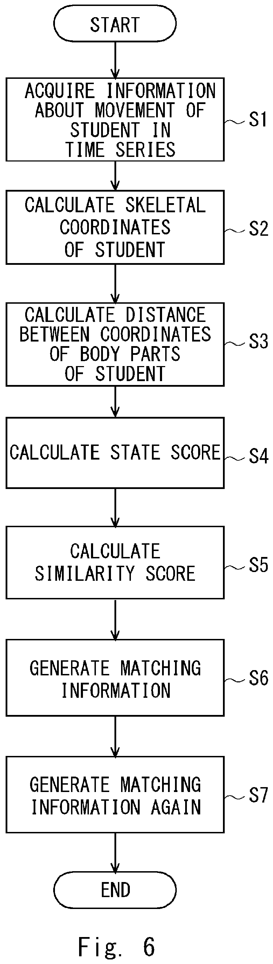

For example, after persons are first assigned (clustered), the persons may be assigned (clustered) again using a self-organizing map that uses, as feature vectors, a change in the distance between the coordinates of the body parts of the person in each predetermined cycle and a matching evaluation obtained by a person evaluating matching information after the person is assigned. That is, as shown in Step S7 of Fig. 6, the generation unit 5 may generate matching information again using the self-organizing map.

Since the matching evaluation is, for example, a feature vector indicating whether a person who has been assigned is satisfied or not satisfied, and the change in the distance between the coordinates of the body parts of a person in each predetermined cycle is, for example, a feature vector indicating a 21-dimensional vector change in each predetermined cycle, a self-organizing map composed of these feature vectors may be used. The self-organizing map can use, for example, a method generally used in clustering with unsupervised learning, such as the x-means method.

For example, when there are a plurality of lesson rooms R, it is not necessary to perform the above-described matching process in all the lesson rooms R, and a lesson room R in which the matching process is performed may be selected as appropriate. That is, the matching system may be able to change the range of the matching process as appropriate.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

**Claims**

1. A matching system (1) comprising:

   an acquisition unit (2) configured to acquire information about movement of a person in a time series;
   a calculation unit (3) configured to calculate a similarity score numerically indicating a similarity between the acquired information about the movement of the person and information about movement of a person with whom a comparison is to be made by comparing the acquired information about the movement of the person with the information about movement of the person with whom the comparison is to be made; and
   a generation unit (5) configured to generate matching information based on the similarity score.

2. The matching system (1) according to Claim 1, wherein the calculation unit (3) calculates the similarity score based on a difference between a first state score indicating a total sum of distances obtained by adding, at a first cycle, a distance between two predetermined points on a body of the person, the distance being calculated based on the acquired information about the movement of the person, and a second state score indicating a total sum of distances obtained by adding, at the first cycle, a distance between the two points on a body of the person with whom the comparison is to be made, the distance being calculated based on the information about the movement of the person with whom the comparison is to be made.

3. The matching system (1) according to Claim 1 or 2, wherein the calculation unit (3) calculates the similarity score based on a difference between a third state score indicating an average value of the number of times per unit time of respiration or pulse of the person within a predetermined period, the average value being calculated based on the acquired information about the movement of the person, and a fourth state score indicating an average value of the number of times per unit time of respiration or pulse of the person with whom the comparison is to be made within the period, the average value being calculated based on the information about the movement of the person with whom the comparison is to be made.

4. The matching system (1) according to Claim 3, wherein the calculation unit (3) calculates the average value by integrating a weight in the number of the times per unit time in accordance with time in the period.

5. The matching system (1) according to any one of Claims 1 to 4, wherein the generation unit (5) determines persons whose similarity scores are within a predetermined error range to be persons having a high similarity to each other, and generates the matching information so that the persons having a high similarity to each other are matched with each other.

6. The matching system (1) according to Claim 5, wherein the generation unit (5) learns a model that inputs the similarity score and outputs the error range by supervised learning using, as a correct answer, a matching evaluation obtained by a person evaluating the matching information, and performs matching between persons based on the output error range.

7. The matching system (1) according to Claim 5 or 6, wherein the generation unit (5) assigns persons so that the persons having a high similarity to each other are matched with each other based on a plurality of predetermined error ranges.

8. The matching system (1) according to Claim 7, wherein the generation unit (5) assigns the persons again by using a self-organizing map composed of a feature vector of a change in the distance between the two predetermined points on the body of the person in each second cycle, the distance being calculated based on the acquired information about the movement of the person, and a feature vector of a matching evaluation obtained by a person evaluating the matching information.

9. A matching method comprising:

   acquiring information about movement of a person in a time series;
   calculating a similarity score numerically indicating a similarity between the acquired information about the movement of the person and information about movement of a person with whom a comparison is to be made by comparing the acquired information about the movement of the person with the information about movement of the person with whom the comparison is to be made; and
   generating matching information based on the similarity score.

**10.** A matching program for causing a computer to:

acquire information about movement of a person in a time series;
calculate a similarity score numerically indicating a similarity between the acquired information about the movement of the person and information about movement of a person with whom a comparison is to be made by comparing the acquired information about the movement of the person with the information about movement of the person with whom the comparison is to be made; and
generate matching information based on the similarity score.

Fig. 1

MATCHING SYSTEM 1

ACQUISITION UNIT ～2

CALCULATION UNIT ～3

DB ～4

GENERATION UNIT ～5

Fig. 2

START

ACQUIRE INFORMATION
ABOUT MOVEMENT OF
STUDENT IN
TIME SERIES ～ S1

CALCULATE SKELETAL
COORDINATES
OF STUDENT ～ S2

CALCULATE DISTANCE
BETWEEN COORDINATES
OF BODY PARTS
OF STUDENT ～ S3

CALCULATE STATE SCORE ～ S4

CALCULATE
SIMILARITY SCORE ～ S5

GENERATE MATCHING
INFORMATION ～ S6

END

F i g. 3

|  | 1 | 2 | · · · | 21 |
|---|---|---|---|---|
| T1 | 1. 5 | 0. 4 | · · · | 3. 1 |
| T2 | 2. 1 | 0. 2 | · · · | 3. 0 |
| · · · |  |  |  |  |

Fig. 4

<u>21</u>

23

24

PROCESSOR

MEMORY

INTERFACE

22

Fig. 5

START

ACQUIRE INFORMATION
ABOUT MOVEMENT OF
STUDENT IN
TIME SERIES — S1

CALCULATE SKELETAL
COORDINATES
OF STUDENT — S2

CALCULATE DISTANCE
BETWEEN COORDINATES
OF BODY PARTS
OF STUDENT — S3

CALCULATE STATE SCORE — S4

CALCULATE
SIMILARITY SCORE — S5

GENERATE MATCHING
INFORMATION — S6

GENERATE MATCHING
INFORMATION AGAIN — S7

END

Fig. 6

Europäisches
Patentamt

European
Patent Office

Office européen
des brevets

# EUROPEAN SEARCH REPORT

Application Number

EP 21 18 8021

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/086510 A1 (FLORES CHRISTINA I [US] ET AL) 24 March 2016 (2016-03-24) | 1,9,10 | INV. G06K9/00 G06K9/62 |
| Y | * paragraphs [0028], [0031], [0038], [0039], [0051] * | 2-4 | |
| X | KR 2018 0103280 A (SEOK WON YEONG [KR]) 19 September 2018 (2018-09-19) | 4-8 | |
| Y | * paragraphs [0048], [0049], [0050], [0063] * | 2 | |
| Y | US 2015/348429 A1 (DALAL EDUL N [US] ET AL) 3 December 2015 (2015-12-03) * paragraph [0002] * | 3,4 | |

TECHNICAL FIELDS
SEARCHED      (IPC)

G06K

The present search report has been drawn up for all claims

| Place of search | Date of completion of the search | Examiner |
|---|---|---|
| The Hague | 18 November 2021 | Stan, Johann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 18 8021

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2021

| Patent document cited in search report | Publication date | Patent family member(s) | Publication date |
|---|---|---|---|
| US 2016086510 A1 | 24-03-2016 | US 2015147734 A1<br>US 2016086510 A1 | 28-05-2015<br>24-03-2016 |
| KR 20180103280 A | 19-09-2018 | NONE | |
| US 2015348429 A1 | 03-12-2015 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017016342 A